# EUROPÄISCHE PATENTSCHRIFT

(11) **EP 0 337 124 B1**
(45) Veröffentlichungstag und Bekanntmachung des Hinweises auf die Patenterteilung: **18.05.1994**
(21) Anmeldenummer: 89104312.7
(22) Anmeldetag: 10.03.1989
(51) Int. Cl.: F16H 61/40

(54) **Hydrostatisches Getriebe**
Hydrostatic transmission
Transmission hydrostatique

(30) Priorität: 13.04.1988 DE 3812300
(43) Veröffentlichungstag der Anmeldung: 18.10.1989
(73) Patentinhaber: Hydromatik GmbH, 89275 Elchingen (DE)
(72) Erfinder: Höscheler, Arnulf, D-7900 Ulm (DE)
(74) Vertreter: Körber, Wolfhart, Dr.rer.nat.

(56) Entgegenhaltungen:
- FR-A- 2 104 897
- US-A- 4 255 091
- "Proceedings of the national conference on fluid power; 31st annual meeting"1975, Illinois-Institute of Technology, Chicago, USA

## Beschreibung

Die Erfindung bezieht sich auf ein hydrostatisches Getriebe nach dem Oberbegriff des Anspruchs 1. Ein derartiges Getriebe ist allgemein bekannt.

Bei einem hydrostatischen Getriebe können sich dann Kaltstartschwierigkeiten einstellen, wenn das im hydraulischen Kreislauf des hydrostatischen Getriebes strömende hydraulische Medium unterkühlt und deshalb zähflüssig wird. Diese Schwierigkeit vergrößert sich mit zunehmendem Abstand zwischen Pumpe und Hydromotor, d.h. mit zunehmender Länge der Hauptleitung, in der die Pumpe und der Hydromotor angeordnet sind.

Mit zunehmender Länge der Hauptleitung stellt sich ein weiteres Problem in der Rückführung der Leckage des Hydromotors in den Tank. Um hier eine lange, sich vom Hydromotor bis in die Nähe der Pumpe erstreckende Leckageleitung zu vermeiden, ist schon vorgeschlagen worden, die Leckageleitung des Hydromotors mit der Niederdruckleitung der Hauptleitung zu verbinden. Bei einer solchen Ausgestaltung ist dann mit Überlastungen und Funktionsschwierigkeiten des Hydromotors zu rechnen, wenn ein Druckanstieg in der Niederdruckleitung stattfindet, was ebenfalls durch Kälte, z.B. durch ein zumindest stellenweise "Einfrieren" der Niederdruckleitung hervorgerufen werden kann, da die Viskosität der Betriebsflüssigkeit, die Höhe des Förderstromes sowie der Leitungswiderstand den Druck in der Rücklaufleitung und somit auch den Druck im Gehäuse des Hydromotors bestimmen. Aus konstruktiven Gründen und mit Rücksicht auf die Dichtungen des Hydromotors, Z.B. eine Wellendichtung, ist dabei die max. zulässige Druckhöhe sehr begrenzt. Zur Vermeidung unzulässiger Drücke müssen die Viskositätswerte der Betriebsflüssigkeit in Bezug auf die auftretenden Betriebs- und Umgebungstemperaturen entsprechend ausgewählt werden. Bei extremen tiefen Temperaturen und bei hohen Leitungswiderständen genügt dies in den meisten Fällen nicht, und es muß insbesondere bei Startvorgängen die Betriebsflüssigkeit entsprechend vorgewärmt werden, bevor ein Betrieb unter Nennleistung möglich ist. Es wäre z.B. möglich, die Betriebsflüssigkeit vor dem Starten durch eine Fremdbeheizung zu erwärmen.

Es ist auch schon eine Bypaßschaltung vorgeschlagen worden, bestehend aus einer in einem, die Hochdruckleitung und die Niederdruckleitung miteinander verbindenden Bypaß angeordneten Ventilkette mit einem Überdruckventil, das so eingestellt ist, daß unter Berücksichtigung des max. zulässigen Rücklaufdruckes nur ein Bruchteil des normalen Förderströmes in der Hauptleitung zirkuliert. Mit der am Überdruckventil anfallenden Verlustwärme kann der Kreislauf aufgeheizt werden.

Diese Maßnahmen sind aus folgenden Gründen nachteilig. Für die Vorwärmung eignet sich im allgemeinen nur der vorhandene Getriebebehälter für die Hydraulikflüssigkeit. Dabei wird die Hydraulikflüssigkeit in der Hauptleitung nicht erfaßt, und deshalb besteht die Gefahr, daß beim Anfahren der Druck in der Niederdruckleitung und somit auch der Druck im Gehäuse des Hydromotors auf einen unzulässigen Wert ansteigt, bei dem mit einer Beschädigung des Hydromotors zu rechnen ist.

Der Erfindung liegt die Aufgabe zugrunde, ein hydrostatisches Getriebe der eingangs bezeichneten Art so auszugestalten, daß das Gehäuse des Hydromotors von unzulässig hohen Drücken der Hauptleitung freigestellt ist.

Diese Aufgabe wird durch die kennzeichnenden Merkmale des Anspruchs 1 gelöst.

Bei der erfindungsgemäßen Ausgestaltung wird der Kreislauf an einer Stelle in Strömungsrichtung vor dem Leitungsanschluß für die Leckölleitung des Hydromotors gedrosselt, wenn der Druck in der Hauptleitung, der sich durch die Niederdruckleitung auf die Leckölleitung und das Motorgehäuse auswirken kann, einen vorbestimmten Wert übersteigt. Es ist dabei im Rahmen der Erfindung möglich, den Durchflußquerschnitt des Ventils in Abhängigkeit entweder vom Druck oder von der Temperatur in der Hauptleitung zu verstellen. Die letztere Maßgabe führt ebenfalls zu einer vorteilhaften Lösung, weil bei niedrigen Temperaturen die Viskosität der Hydraulikflüssigkeit zunimmt, was ebenfalls zu den eingangs beschriebenen Problemen führt und oft Ursache dieser Probleme ist. Dabei kann das Ventil elektrisch, hydraulisch oder auch mechanisch gesteuert sein. Sobald der Druck sinkt oder die Temperatur des hydraulischen Mediums steigt, wird das Ventil vorzugsweise kontinuierlich geöffnet bzw. sein Durchflußquerschnitt kontinuierlich vergrößert. Im Normal betrieb, d.h. bei normalen Druckverhältnissen oder bei normaler Außentemperatur bzw. nach dem Warmlaufen des Getriebes kann die Drosselung ganz aufgehoben werden.

Bei der erfindungsgemäßen Ausgestaltung kann es zu einem schädlichen hohen Druck im Bereich des Leitungsanschlusses der Leckölleitung gar nicht kommen, da das erfindungsgemäße Ventil die Zufuhr der Hydraulikflüssigkeit zum Leitungsanschluß drosselt bzw. stoppt und ein schädlich hoher Druck sich gar nicht auswirken kann. Dabei kann das Ventil gemäß den Ansprüchen 2 bis 4 vor dem Leitungsanschluß für die Leckölleitung und sowohl in der Hochdruckleitung als auch in der Niederdruckleitung angeordnet sein, wobei sich gemäß Anspruch 2 eine Anordnung des Ventils in der Nähe des Hydromotors aus Gründen einer einfachen und funktionssicheren Bauweise empfiehlt.

Die Ausbildung nach Anspruch 5 trägt zu weiteren Vereinfachung der erfindungsgemäßen Ausgestaltung bei, wobei sich eine automatische Verstellung des Ventils ergibt, und zwar insbesondere ohne zusätzlicher Steuersignale aus dem Bereich der Pumpe, so daß auch keine langen Steuerleitungen zwischen dem Bereich, in dem die Pumpe angeordnet ist, und dem Ventil erforderlich sind.

Bei der Ausgestaltung nach Anspruch 6 wird der Ventilkörper des Ventils in Abhängigkeit vom Druckabfall einer vorzugsweise konstanten Drossel beaufschlagt, die sowohl in der Hochdruckleitung als auch in der Niederdruckleitung und sowohl vor als auch hinter dem Ventil angeordnet sein kann. Wesentlich ist, daß die Drossel in Strömungsrichtung vor dem Leitungsanschluß der Leckölleitung angeordnet ist, so daß sich ein schädlich hoher Druck in der Niederdruckleitung nicht in den Leckölkanal und somit auch nicht in das Gehäuse des Hydromotors auswirken kann.

Die Ausbildung nach Anspruch 11 ist aus konstruktiven Gründen und Handhabungsgründen vorteilhaft.

Gemäß Anspruch 12 ist ein Umlauf der Hydraulikflüssigkeit in der Hauptleitung bei Aufrechterhaltung eines bestimmten Arbeitsdruckes gewährleistet, wenn die Hauptleitung hinter dem Bypaß verstopft bzw. in der Durchströmung beeinträchtigt sein sollte. An der Drossel des Ventils und/oder an der des Überdruckventils entsteht eine Erwärmung, die vorteilhaft zum Aufwärmen der Hydraulikflüssigkeit bei Kaltstartschwierigkeiten ausgenutzt werden kann.

Die erfindungsgemäße Ausgestaltung eignet sich sowohl für einen offenen Kreislauf als auch vorzugsweise für einen geschlossenen Kreislauf.

Aufgrund der Unabhängigkeit zwischen dem die Pumpe enthaltenden Getriebeteil und dem den Hydromotor enthaltenden Getriebeteil eignet sich die erfindungsgemäße Ausgestaltung insbesondere für solche Verwendungsfälle, in denen die vorgenannten Getriebeteile lediglich durch die Hochdruckleitung und die Niederdruckleitung miteinander verbunden sind, und zwar in Form von flexiblen Leitungen wie Schläuchen. In einem solchen Fall kann der den Hydromotor enthaltende Getriebeteil unabhängig von dem die Pumpe enthaltenden Getriebeteil verlagert werden. Ein bevorzugter Verwendungsfall für ein erfindungsgemäß ausgestaltetes hydrostatisches Getriebe ist der Schiffbau, da auch bei einem großen Abstand zwischen der Pumpe und dem Hydromotor eine praktische Anordnung und Handhabung des den Hydromotor enthaltenden Getriebeteils möglich ist. Es ist möglich, den den Hydromotor enthaltenden Getriebeteil bei Verwendung als Antrieb für eine Löschwasserpumpe auf einem Schiff über Bord zu werfen, um die vom Hydromotor angetriebene Wasserpumpe, die mit dem Hydromotor und dem besonderen erfindungsgemäßen Bauteilen eine Baueinheit bilden kann, in Kontakt mit dem das Schiff tragenden Wasser zu bringen, wobei aufgrund der erfindungsgemäßen Ausgestaltung Überlastungen des Hydromotors und Funktionsschwierigkeiten auch bei verhältnismäßig großer Kälte vermieden sind. Nach Beendigung des Einsatzes kann der den Hydromotor enthaltende Getriebeteil wieder an Bord gezogen und raumsparend gelagert werden.

Nachfolgend wird die Erfindung anhand von in vereinfachten Zeichnungen dargestellten bevorzugten Ausführungsbeispielen näher erläutert. Es zeigt
- Fig. 1: einen Steuerplan für einen erfindungsgemäß ausgestaltetes hydrostatisches Getriebe;
- Fig. 2 bis 6: Abwandlungen des hydrostatischen Getriebes.

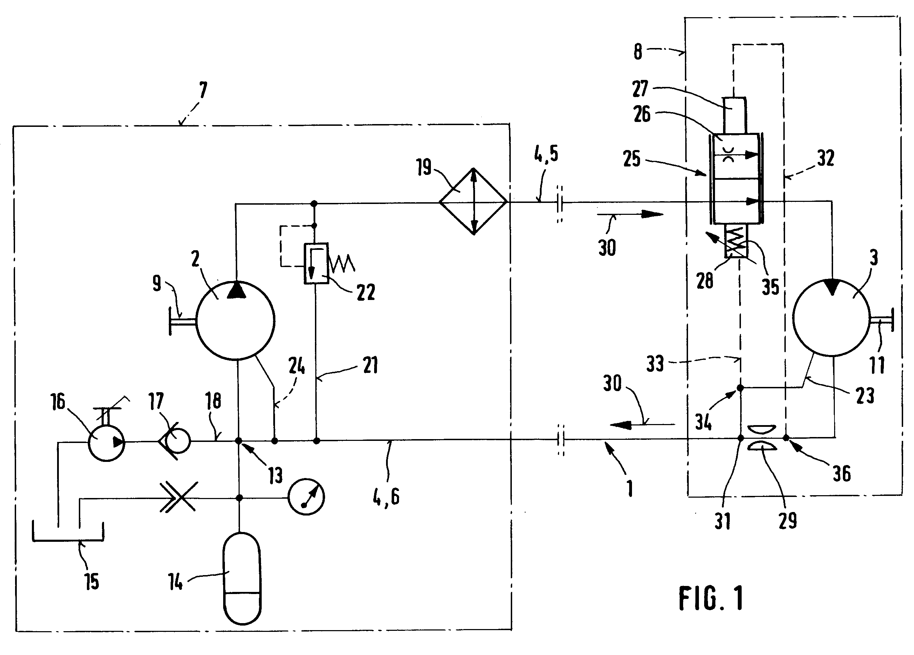

Das in Fig. 1 allgemein mit 1 bezeichnete hydrostatische Getriebe besteht in üblicher Weise aus einer Pumpe 2 und einem Hydromotor 3 in Form von Axialkolbenmaschinen, die in eine allgemein mit 4 bezeichnete Hauptleitung geschlossenen Kreislaufs eingesetzt sind, deren strömungsrichtungabhängig (Pfeil) von der Pumpe 2 zum Hydromotor 3 führender Leitungsabschnitt die Hochdruckleitung 5 und deren vom Hydromotor 3 zur Hydropumpe 2 führender Leitungsabschnitt die Niederdruckleitung 6 ist. Der die Pumpe 2 enthaltende Teil des Getriebes ist mit 7 und der den Hydromotor 3 enthaltende Teil des Getriebes ist mit 8 bezeichnet. Vorzugsweise bilden die Getriebeteile 7, 8 zwei voneinander positionsmäßig unabhängige Teile, die lediglich durch die Hochdruckleitung 5 und die Niederdruckleitung 6 in Form von flexiblen Hydraulikleitungen aus Kunststoff oder Metall verbunden sind.

Beim vorliegenden Ausführungsbeispiel werden die Pumpe 2 und der Hydromotor 3 durch Axialkolbenmaschinen konstanten Hubvolumens gebildet, die für den Betrieb in nur eine Drehrichtung eingerichtet sind. Die Pumpe 2 wird durch einen nicht dargestellten Antriebsmotor mittels einer Eingangswelle 9 angetrieben. Dem Hydromotor 3 ist eine Ausgangswelle 11 zugeordnet, mit der sich ein Verbraucher, wie eine Arbeitsmaschine oder auch ein Fahrwerk, antreiben läßt.

Der geschlossene Kreislauf des hydrostatischen Getriebes 1 ist im Bereich der Niederdruckleitung 6 nahe der Pumpe 2 mit einem hydraulischen Speicher 14 verbunden, durch den das System vorgespannt wird. Der Speicher 14 wird über eine Fülleinrichtung mit einer aus einem Ölbehälter 15 saugenden Pumpe 16 und einem zur Pumpe 16 hin schließenden Rückschlagventil 17 aufgeladen, die in einem hydraulischen Leitungsabschnitt 18 angeordnet und bei 13 ebenfalls mit der Niederdruckleitung 6 verbunden sind. In der Hochdruckleitung 5 ist ein Wärmetauscher 19 angeordnet, mittels dem die im Betrieb entstandene Verlustwärme in nicht dargestellter Weise abgeführt wird. In der Nähe der Pumpe 2 erstreckt sich zwischen der Hochdruckleitung 5 und der Niederdruckleitung 6 eine Bypaßleitung 21, in der ein Überdruckventil 22 angeordnet ist.

Der Hydromotor 3 und die Pumpe 2 sind durch Leckölleitungen 23, 24 mit der Niederdruckleitung 6 verbunden, wodurch die Abführung des Lecköls in die Niederdruckleitung 6 hinein gewährleistet ist.

Um zu verhindern, daß bei kalten Temperaturen ein aufgrund niedriger Viskosität hoher und deshalb schädlicher, sich in der Niederdruckleitung 6 aufbauender Druck durch die Leckölleitung 23 von innen auf das Gehäuse des Hydromotors 3 wirkt, ist in der Hochdruckleitung 5 in der Nähe des Hydromotors 3 ein Drosselventil 25 angeordnet, dessen Ventilschieber 26 zu beiden Stirnseiten durch jeweils einen Hydraulikzylinder 27, 28 beaufschlagbar ist, die dem Gehäuse des Drosselventils 25 zugeordnet sind. Die Beaufschlagung des Ventilschiebers 26 erfolgt in Abhängigkeit vom Differenzdruck vor und hinter einer Konstantdrossel 29, die in der Niederdruckleitung 6 in Strömungsrichtung (Pfeil 30) vor dem Leitungsanschluß 31 angeordnet ist, durch den die Leckölleitung 23 mit der Niederdruckleitung 6 verbunden ist. Vor und hinter der Konstantdrossel 29 gehen von der Niederdruckleitung 6 Leitungen 32, 33 aus, von denen die mit 32 bezeichnete, den höheren Druck des Differenzdruckes führende Leitung mit dem Hydraulikzylinder 27 und die mit 33 bezeichnete, den geringeren Druck des Differenzdrucks führende Leitung mit dem Hydraulikzylinder 28 verbunden ist. Die Leitung 33 ist bei 34 an die Leckölleitung 23 angeschlossen, jedoch wirkt sowohl in der Leckölleitung 23 als auch in der Leitung 33 der hinter der Konstantdrossel 29 vorhandene Druck. Dem Hydraulikzylinder 28 ist eine Druckfeder 35 zugeordnet, deren Federkraft verstellbar ist. Es wirkt somit der höhere Druck des Differenzdruckes gegen die Druckfeder 35. Der Ventilschieber 26 ist umgekehrt proportional zum im Bereich der Konstantdrossel 29 vorhandenen Druck verstellbar, d.h. er ist kontinuierlich zwischen einer Maximal- und Minimalstellung verstellbar.

Das vorbeschriebene hydrostatische Getriebe 1 ist vorzugsweise für den Antrieb einer Löschwasserpumpe (nicht dargestellt) für ein Schiff bestimmt, die vom Hydromotor 3 angetrieben wird und vorzugsweise mit dem Hydromotor 3, dem Drosselventil 25 und der Konstantdrossel 29 eine Baueinheit, insbesondere in Form eines Blockes, bildet. Aufgrund der Ausführung der Hochdruckleitung 5 und der Niederdruckleitung 6 als flexible Leitungen, vorzugsweise Kunststoffleitungen, kann die mit 38 bezeichente Baueinheit in einfacher Weise über Bord geworfen werden, um die Löschwasserpumpe in Kontakt mit dem Wasser zu bringen, in dem das Schiff sich befindet. Da die Leckölleitung 23 an die Niederdruckleitung 6 angeschlossen ist, bedarf es keiner besonderen, zur die Pumpe enthaltenden Baueinheit 7 zurückführenden Leitungen, die im vorliegenden Fall sehr lang, z.B. 20 m und mehr, ausgeführt werden müßten, was die Herstellungskosten erheblich verteuern und die Handhabung erschweren würde.

Im folgenden wird die Funktion des hydrostatischen Getriebes 1 beschrieben. Die angetriebene Pumpe 2 befördert die in der Hauptleitung 4 vorhandene Hydraulikflüssigkeit in Pfeilrichtung 30, wodurch der Hydromotor 3 angetrieben wird. Stellt sich z.B. aufgrund von Kälte und dadurch hervorgerufener hoher Viskosität in der Niederdruckleitung 6 eine Druckerhöhung auf einen vorbestimmbaren Wert ein, dann wird automatisch der Ventilschieber 26 hydraulisch in eine Drosselstellung verschoben, wodurch beim vorliegenden Ausführungsbeispiel die zum Hydromotor 3 gelangende Fördermenge so gedrosselt wird, daß der vorbestimmbare Druck in der Niederdruckleitung 6 nicht überschritten wird. Der Übergang zwischen den Funktionsstellungen des Ventilschiebers 26 erfolgt im Hinblick auf die Drosselwirkung angenähert stetig, d.h. mit zunehmendem Druck in der Niederdruckleitung 6 wird das Drosselventil 25 geschlossen und mit abnehmendem Druck geöffnet. Die Druckdifferenz zwischen den Steuerleitungen 32, 33 entspricht dem Druckabfall an der Konstantdrossel 29, welcher in Abhängigkeit von der Durchflußmenge und der Viskosität der Betriebsflüssigkeit entsteht. Der Druckabfall an der Konstantdrossel 29 verhält sich damit proportional zum Druckabfall in der gesamten Niederdruckleitung 6 und dient als Regelgröße für die Stellung des Ventilschiebers 26. Ist beim Startvorgang, insbesondere aufgrund hoher Temperatur, die Viskosität so niedrig, daß selbst bei vollem Förderstrom der Pumpe 2 der zulässige Druckabfall in der Niederdruckleitung 6 nicht überschritten wird, so ist der analog entsprechende Druckabfall an der Konstantdrossel 29 nicht in der Lage, den Ventilschieber 26 gegen die Wirkung der Druckfeder 35 aus seiner Stellung für freien Durchgang zu bewegen, ist dagegen die Viskosität z.B. aufgrund niedriger Temperatur zu hoch, dann zwingt der Differenzdruck an der Konstantdrossel 29 den Ventilschieber 26 in eine Drosselstellung, die den Zufluß zum Hydromotor 3 vermindert und somit die zu einer Druckerhöhung in der Niederdruckleitung 6 führende Wirkung der zu hohen Viskosität kompensiert. Die dabei vom Hydromotor 3 nicht aufgenommene Förderstrommenge fließt unter den max. Betriebsdruck durch das Überdruckventil 22 ab. Die max. Drosselwirkung des Ventilschiebers 26 ist definiert durch die max. zulässige Betriebsviskosität und durch jenen Förderstrom, der unter dem gegebenen Systemdruck - bestimmt durch das Überdruckventil 22 - in der Niederdruckleitung 6 den max. zulässigen Druck bewirkt. Solange der Ventilschieber 26 nicht auf freien Durchgang geschaltet hat, befindet sich das Getriebe im Kaltstartbereich. Die vom Hydromotor 3 nicht aufgenommene Energie wird an der Drosselstelle des Überdruckventils 22 vollständig und die Nutzenergie, die zum Hydromotor 3 fließt, an der Drosselstelle des Drosselventils 25 teilweise in Wärme umgewandelt und dient so der raschen Aufheizung des Kreislaufs. Während des Kaltstartvorganges wird automatisch von der Hydropumpe 2 immer die volle Eingangsleistung aufgenommen, weil das Drosselventil 25 nicht den gesamten Förderstrom passieren läßt und so ein Teilstrom über das Überdruckventil 22 unter dem höchsten Systemdruck abfließen muß. Dieser Systemdruck bestimmt die Größe der Leistungsaufnahme. Das am Hydromotor 3 gleichzeitig abgegebene Drehmoment bestimmt in dieser Phase den Betriebsdruck der Hydropumpe 2 nicht.

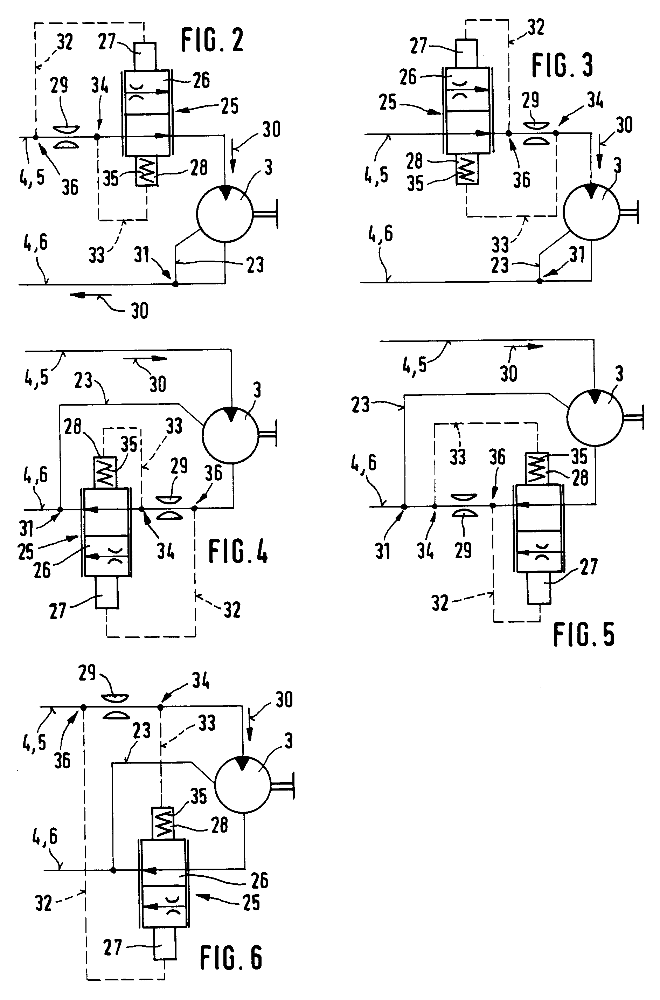

In den Fig. 2 bis 6 sind vorteilhafte Alternativen für die Anordnung des Drosselventils 25 und der Konstantdrossel 29 dargestellt. Beim Ausführungsbeispiel gemäß Fig. 2 befinden sich die Konstantdrossel 29 und die Leitungsanschlüsse 34, 36 für die Steuerleitungen 32, 33 in der Hochdruckleitung 5, und zwar vor dem Drosselventil 25. Im Gegensatz dazu befinden sich die Konstantdrossel 29 und die Leitungsanschlüsse 31, 34 beim Ausführungsbeispiel gemäß Fig. 3 zwar ebenfalls in der Hochdruckleitung 5, jedoch in Strömungsrichtung hinter dem Drosselventil 25, d.h. zwischen letzterem und dem Hydromotor 3. Bei den vorbeschriebenen drei Ausgestaltungen wird dem Hydromotor 3 jeweils die gedrosselte Fördermenge zugeführt.

Bei den Ausführungsbeispielen gemäß Fig. 4 bis 6 befindet sich das Drosselventil 25 in der Niederdruckleitung 6, und zwar in Strömungsrichtung vor dem Leitungsanschluß 31 für die Leckölleitung 23, wobei die Konstantdrossel 29 und die Leitungsanschlüsse 34, 36 für die Steuerleitungen 32, 33 in Strömungsrichtung vor dem Drosselventil 25, d.h. zwischen letzterem und dem Hydromotor 3 (Fig. 4) in Strömungsrichtung hinter dem Drosselventil 25, d.h. zwischen letzterem und dem Leitungsanschluß 31 für die Leckölleitung 23 (Fig. 5) oder in der Hochdruckleitung 5 (Fig. 6) angeordnet sein können.

Im Rahmen der Erfindung ist es auch möglich, den Ventilschieber 26 nur zwischen zwei Funktionsstellungen (offen, zu oder gedrosselt) verstellbar anzuordnen.

Bei allen Ausführungsbeispielen wird somit die Strömungsmenge vor dem Leitungsanschluß 31 für die Leckölleitung 23 gedrosselt, so daß sich in der Niederdruckleitung 6, d.h. zumindest im Bereich des Leitungsanschlusses 31 für die Leckölleitung 23, kein schädlicher Druck aufbauen kann.

## Patentansprüche

1. Hydrostatisches Getriebe (1) mit einer Pumpe (2) und einem Hydromotor (3), die in einer eine Hochdruck- und eine Niederdruckleitung aufweisenden Hauptleitung (4) angeordnet sind, wobei eine Leckölleitung (23) des Hydromotors (3) an die Niederdruckleitung (6) der Hauptleitung (4) angeschlossen ist,
dadurch gekennzeichnet, daß in Strömungsrichtung (Pfeil 30) vor dem Leitungsanschluß (31) der Leckölleitung (23) ein einen Ventilkörper (26) aufweisenden Ventil (25) mit verstellbarem Durchflußquerschnitt angeordnet ist, das den Durchflußquerschnitt mit zunehmendem Druck oder bei Untertemperatur in der Hauptleitung (4) verringert.

2. Hydrostatisches Getriebe nach Anspruch 1, dadurch gekennzeichnet, daß das Ventil (25) in der Nähe des Hydromotors (3) angeordnet ist.

3. Hydrostatisches Getriebe nach einem der Ansprüche 1 bis 2, dadurch gekennzeichnet, daß das Ventil (25) in der Hochdruckleitung (5) angeordnet ist.

4. Hydrostatisches Getriebe nach einem der Ansprüche 1 bis 2, dadurch gekennzeichnet, daß das Ventil (25) in der Niederdruckleitung (6) angeordnet ist.

5. Hydrostatisches Getriebe nach einem der Ansprüche 1 bis 4, dadurch gekennzeichnet, daß der Ventilkörper (26) des Ventils (25) durch den Druck in Strömungsrichtung (30) vor einer, vorzugsweise in der Nähe des Hydromotors (3) angeordneten Drossel (29) in der Hauptleitung (4) beaufschlagbar ist.

6. Hydrostatisches Getriebe nach Anspruch 5, dadurch gekennzeichnet, daß der Ventilkörper (26) auf seiner anderen Seite durch den Druck in Strömungsrichtung (30) hinter der Drossel (29) beaufschlagbar ist.

7. Hydrostatisches Getriebe nach Anspruch 5 oder 6, dadurch gekennzeichnet, daß der Ventilkörper (26) durch den vor der Drossel (29) vorhandenen Druck gegen eine Feder (35) beaufschlagbar ist.

8. Hydrostatisches Getriebe nach einem der Ansprüche 5 bis 7, dadurch gekennzeichnet, daß die Drossel (29) in der Niederdruckleitung (6) zwischen dem Hydromotor (3) und dem Leitungsanschluß (31) für die Leckölleitung (23) angeordnet ist (Fig. 1).

9. Hydrostatisches Getriebe nach einem der Ansprüche 5 bis 7, dadurch gekennzeichnet, daß die Drossel (29) in der Hochdruckleitung (5) angeordnet ist (Fig. 6).

10. Hydrostatisches Getriebe nach einem der Ansprüche 5 bis 9, dadurch gekennzeichnet, daß die Drossel (29) in Strömungsrichtung (30) vor oder hinter dem Ventil (25) angeordnet ist (Fig. 2, 4 und 6 oder Fig. 1, 3 und Fig. 5).

11. Hydrostatisches Getriebe nach einem der Ansprüche 1 bis 10, dadurch gekennzeichnet, daß das Ventil (25), die Drossel (29) und/oder die Leitungsanschlüsse (34, 36) in einer den Hydromotor (3) enthaltenden Baueinheit (38) bzw. Bauteil angeordnet sind.

12. Hydrostatisches Getriebe nach einem der Ansprüche 1 bis 11, dadurch gekennzeichnet, daß vorzugsweise in der Nähe der Pumpe (2) eine Bypaßleitung (21) zwischen der Hochdruckleitung (5) und der Niederdruckleitung (6) vorgesehen ist, in der ein Überdruckventil (22) angeordnet ist.

13. Hydrostatisches Getriebe nach einem der Ansprüche 1 bis 12, dadurch gekennzeichnet, daß die Pumpe (2) mit einer Leckölleitung (24) an die Niederdruckleitung (6) angeschlossen ist.

14. Hydrostatisches Getriebe nach einem der Ansprüche 1 bis 13, dadurch gekennzeichnet, daß es ein hydrostatisches Getriebe geschlossenen Kreislaufs ist.

## Claims

1. Hydrostatic transmission (1) having a pump (2) and a hydraulic motor (3) arranged in a main line (4) having a low pressure line and a high pressure line, an oil drain line (23) of the hydraulic motor (3) being connected to the low pressure line (6) of the main line (4),
characterised in that a valve (25) having a valve body (26) and with adjustable passage cross-section is arranged before - in the direction of flow (arrow 30) - the line connection (31) of the oil drain line (23), which valve reduces the passage cross-section with increasing pressure or at low temperatures in the main line (4).

2. Hydrostatic transmission according to claim 1, characterised in that the valve (25) is arranged near the hydraulic motor (3).

3. Hydrostatic transmission according to any one of claims 1 to 2, characterised in that the valve (25) is arranged in the high pressure line (5).

4. Hydrostatic transmission according to any one of claims 1 to 2, characterised in that the valve (25) is arranged in the low pressure line (6).

5. Hydrostatic transmission according to any one of claims 1 to 4, characterised in that the valve body (26) of the valve (25) can be acted on by the pressure before - in the direction of flow (30) - a throttle (29) arranged preferably near the hydraulic motor (3) in the main line (4).

6. Hydrostatic transmission according to claim 5, characterised in that the valve body (26) can be acted on its other side by the pressure after - in the direction of flow (30) - the throttle (29).

7. Hydrostatic transmission according to claim 5 or 6, characterised in that the valve body (26) can be urged against a spring (35) by the pressure before the throttle (29).

8. Hydrostatic transmission according to any one of claims 5 to 7, characterised in that the throttle (29) is arranged in the low pressure line (6) between the hydraulic motor (3) and the line connection (31) for the oil drain line (23) (Fig. 1).

9. Hydrostatic transmission according to any one of claims 5 to 7, characterised in that the throttle (29) is arranged in the high pressure line (5) (Fig. 6).

10. Hydrostatic transmission according to any one of claims 5 to 9, characterised in that the throttle (29) is arranged before or after - in the direction of flow (30) - the valve (25) (Fig. 2, 4 and 6 or Fig. 1, 3 and 5).

11. Hydrostatic transmission according to any one of claims 1 to 10, characterised in that the valve (25), the throttle (29) and/or the line connections (34, 36) are arranged in a constructional unit (38) or constructional part comprising the hydraulic motor (3).

12. Hydrostatic transmission according to any one of claims 1 to 11, characterised in that, preferably near the pump (2), a bypass line (21) is provided between the high pressure line (5) and the low pressure line (6), in which a pressure relief valve (22) is arranged.

13. Hydrostatic transmission according to any one of claims 1 to 12, characterised in that the pump (2) is connected to the low pressure line (6) by an oil drain line (24).

14. Hydrostatic transmission according to any one of claims 1 to 13, characterised in that it is a closed circuit hydrostatic transmission.

## Revendications

1. Transmission hydrostatique (1), avec une pompe (2) et un moteur hydraulique (3), disposés dans une conduite principale (4) présentant une conduite haute pression et une conduite basse pression, une conduite d'huile de fuite (23) du moteur hydraulique (3) étant raccordée à la conduite basse pression (6) de la conduite principale (4), caractérisée en ce qu'une soupape (25) à section transversale d'écoulement réglable, présentant un corps de soupape (26), est disposée en amont du raccordement de conduite (31) de la conduite d'huile de fuite (23), dans la direction de l'écoulement (flèche 30), et diminue la section transversale d'écoulement lorsque la pression augmente ou qu'une basse température règne dans la conduite principale (4).

2. Transmission hydrostatique selon la revendication 1, caractérisée en ce que la soupape (25) est disposée à proximité du moteur hydraulique (3).

3. Transmission hydrostatique selon l'une des revendications 1 à 2, caractérisée en ce que la soupape (25) est disposée dans la conduite haute pression (5).

4. Transmission hydrostatique selon l'une des revendications 1 à 2, caractérisée en ce que la soupape (25) est disposée dans la conduite basse pression (6).

5. Transmission hydrostatique selon l'une des revendications 1 à 4, caractérisée en ce que le corps de soupape (26) de la soupape (25) peut être sollicité par la pression dans la direction d'écoulement, en amont d'un étranglement (29) placé dans la conduite principale (4) et disposé de préférence à proximité du moteur hydraulique (3).

6. Transmission hydrostatique selon la revendication 5, caractérisée en ce que le corps de soupape (26) peut être sollicité sur son autre côté par la pression dans la direction d'écoulement (30), en aval de l'étranglement (29).

7. Transmission hydrostatique selon la revendication 5 ou 6, caractérisée en ce que le corps de soupape (26) peut être sollicité par la pression régnant en amont de l'étranglement (29) et à l'encontre de la force d'un ressort.

8. Transmission hydrostatique selon l'une des revendications 5 à 7, caractérisée en ce que l'étranglement (29) est disposé dans la conduite basse pression (6), entre le moteur hydraulique (3) et le raccordement de conduite (31) destiné à la conduite d'huile de fuite (23) (figure 1).

9. Transmission hydrostatique selon l'une des revendications 5 à 7, caractérisée en ce que l'étranglement (29) est disposé dans la conduite haute pression (5) (figure 6).

10. Transmission hydrostatique selon l'une des revendications 5 à 9, caractérisée en ce que l'étranglement (29) est disposé en amont ou en aval de la soupape (26), dans la direction d'écoulement (30) (figures 2, 4 et 6 ou figure 1, 3 et figure 5).

11. Transmission hydrostatique selon l'une des revendications 1 à 10, caractérisée en ce que la soupape (25), l'étranglement (29) et/ou les raccordements de conduite (34, 36) sont disposés dans un ensemble de construction (38) ou un élément de construction contenant le moteur hydraulique (3).

12. Transmission hydrostatique selon l'une des revendications 1 à 11, caractérisée en ce qu'une conduite de dérivation (21) est prévue, de préférence à proximité de la pompe (2), entra la conduite haute pression (5) et la conduite basse pression (6), dans laquelle est disposée une soupape de surpression (22).

13. Transmission hydrostatique salon l'une des revendications 1 à 12, caractérisée en ce que la pompe (2) est raccordée à la conduite basse pression (6) par l'intermédiaire d'une conduite d'huile de fuite (24).

14. Transmission hydrostatique selon l'une des revendications 1 à 13, caractérisée en ce que la transmission hydrostatique est an circuit fermé.
